# EUROPEAN PATENT SPECIFICATION

(11) **EP 2 693 091 B1**
(45) Date of publication and mention of the grant of the patent: **29.04.2015**
(21) Application number: 13177728.6
(22) Date of filing: 24.07.2013
(51) Int. Cl.: F16K 31/40

(54) **Electrovalve for supplying a fluid into a washing machine, in particular for household use, and washing machine thereof**
Elektroventil zur Abgabe einer Flüssigkeit in eine Waschmaschine, insbesondere für den Haushaltsgebrauch, und Waschmaschine dafür
Électrorobinet permettant l'alimentation d'un fluide dans une machine à laver, en particulier pour une utilisation domestique et machine à laver correspondante

(30) Priority: 30.07.2012 IT TO20120678
(43) Date of publication of application: 05.02.2014
(73) Proprietor: T & P - S.p.A., 21040 Venegono Superiore (VA) (IT)
(72) Inventor: Revello, Ivo, 21040 Venegono Inferiore (VA) (IT)
(74) Representative: Reposio, Giancarlo

(56) References cited:
- WO-A1-02/42616
- DE-A1-102007 016 736
- US-A- 5 307 651
- US-B1- 7 891 370

## Description

The present invention relates to an electrovalve for supplying a wash fluid into a washing machine, in particular for household use, according to the preamble of claim 1. The present invention further relates to a washing machine comprising said electrovalve.

It is known that household washing machines, e.g. laundry washing machines, dishwashers and the like, comprise at least one electrovalve connected to the water main for supplying water needed for washing laundry (in the case of a washing machine) or crockery (in the case of a dishwasher or the like).

An electrovalve of a known type usually comprises a body provided with a duct for the passage of said wash fluid, said duct comprising:
- at least one inlet duct for a wash fluid, which can be connected, for example, to a tap of the water main,
- at least one outlet duct for the wash fluid, which can be connected, for example, to a washing machine,
- an intermediate portion for connecting said at least one inlet duct to said at least one outlet duct .

Furthermore, known electrovalves include on-off means, usually associated with said intermediate portion, for selectively allowing or preventing the connection between said at least one inlet duct and said at least one outlet duct. In particular, said on-off means may comprise at least one electromagnet electrically connected to the served washing machine, which (e.g. through a timer of its own) controls at appropriate times (e.g. at the beginning and at the end of a wash step) the power supplied to the electromagnet in order to open or close a section of the electrovalve, in particular a section of the intermediate duct of the electrovalve.

Known electrovalves are often positioned, usually together with the washing machines in which they have been installed, in an external environment, e.g. a balcony or a terrace of a house; as a consequence, the washing machine and its electrovalve are exposed to the ambient conditions of that external environment.

Also, the production cycles of valves and washing machines may include testing steps where water is used for simulating the operation thereof, and water may remain in the hydraulic circuit of said valves or washing machines, which are then stored or transported in unconditioned environments, where they are exposed to ambient conditions similar to those of an external environment.

In such situations, the electrovalve may be affected by very cold or frosty operating environments (usually an external environment or an environment comparable to an external environment), in particular when it contains a certain quantity of wash fluid; in fact, in such a situation the wash fluid contained in the electrovalve may freeze and (as is known) increase in volume, thus possibly breaking the electrovalve.

Of course, a broken electrovalve will pose a number of problems such as, for example, impossibility of using the washing machine or flooding of the environment where the washing machine and the electrovalve have been placed.

In some solutions known in the art, the problem of an electrovalve breaking due to freezing of the wash fluid contained therein has been faced by designing said electrovalve in a manner such that it comprises heating means which, when activated, allow warming up some portions of the electrovalve itself, thus avoiding the risk that the wash fluid contained in the electrovalve might freeze.

However, such solutions have proved to be costly and to require a more complex realization of the whole electrovalve. In addition, such solutions cannot ensure damage prevention when the electrovalve or the washing machine are not connected to the electric mains, as is the case, for example, during storage or transportation.

In other known solutions, the electrovalve is so realized as to comprise an elastic element made of compressible material positioned in the inlet duct and/or in the outlet duct and/or in the intermediate portion of the electrovalve, said elastic element being adapted to compensate for a possible increase in the volume and/or pressure of the wash fluid, in particular upon freezing of said fluid.

However, although such solutions adequately solve the problem of the electrovalve breaking due to freezing of the wash fluid contained therein, they inevitably carry the drawback of reducing the flow of wash fluid through the electrovalve, said flow reduction being caused by the presence of the elastic element made of compressible material. DE 102007 016 736 A1 discloses electrovalve comprising a duct adapted to compensate for an increase of the volume of the fluid in said duct upon freezing of said fluid.

In this frame, it is the main object of the present invention to provide an electrovalve for supplying a wash fluid into a washing machine, in particular for household use, and a related washing machine, which are so realized as to overcome the drawbacks of the prior art.

It is another object of the present invention to provide an electrovalve which is so realized as to be unaffected by the environmental conditions of the place that houses the washing machine and its electrovalve.

It is a further object of the present invention to provide an electrovalve which is so realized as to be unaffected by very cold or frosty operating environments, in particular when it contains a certain quantity of wash fluid.

In particular, it is one object of the present invention to realize said electrovalve in a manner such that it can be prevented from breaking due to the freezing and expansion of the wash fluid contained therein.

It is a further object of the present invention to provide an electrovalve which is so realized that it is not excessively costly and not excessively difficult and complex to manufacture.

It is yet another object of the present invention to provide an electrovalve which is so realized as to both solve the problem of the electrovalve breaking upon freezing of the wash fluid contained therein and ensure an adequate flow of wash fluid through the electrovalve, the inlet duct and/or the outlet duct and/or the intermediate portion of said electrovalve accommodating no additional element that might cause a decrease of the wash fluid flow.

Said objects are achieved by the present invention through an electrovalve for supplying a wash fluid into a washing machine, in particular for household use, and a related washing machine incorporating the features set out in the appended claims, which are an integral part of the present description.

Further objects, features and advantages of the present invention will become apparent from the following detailed description and from the annexed drawings, which are supplied by way of non-limiting explanatory example, wherein:
- Figs. 1a and 1b are, respectively, a sectional perspective view and a sectional side view of a first embodiment of an electrovalve for supplying a fluid into a washing machine, in particular for household use, according to the present invention;
- Figs. 2a and 2b are, respectively, a sectional perspective view and a sectional side view of a second embodiment of an electrovalve for supplying a fluid into a washing machine, in particular for household use, according to the present invention;
- Figs. 3a and 3b are, respectively, a sectional perspective view and a sectional side view of a third embodiment of an electrovalve for supplying a fluid into a washing machine, in particular for household use, according to the present invention.

Referring now to the annexed drawings, reference numeral 1 designates as a whole an electrovalve for supplying a fluid into a washing machine, in particular for household use, according to the present invention.

It should be noted that said washing machine is not shown in the annexed drawings; furthermore, the same reference numerals are used in order to designate equivalent elements in the various drawings and embodiments.

The electrovalve 1 according to the present invention comprises a body 2 provided with a duct C for the passage of said fluid. It must be pointed out that the fluid supplied into the machine and flowing in the duct C is normally a wash fluid.

In particular, the duct C comprises at least one inlet duct 10 for a fluid; for example, said inlet duct 10 can be connected to a tap (not shown) of a water main.

The duct C of the electrovalve 1 further comprises at least one outlet duct 20 for the fluid; for example, said at least one outlet duct 20 can be connected to the washing machine.

The duct C of the electrovalve 1 also comprises an intermediate duct 30 for connecting said at least one inlet duct 10 to said at least one outlet duct 20.

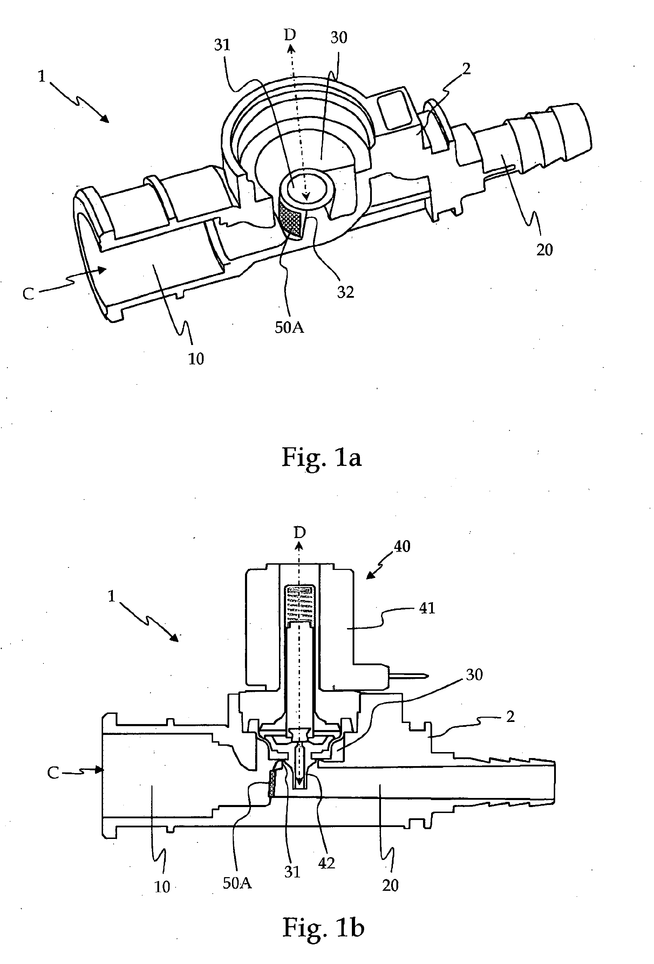

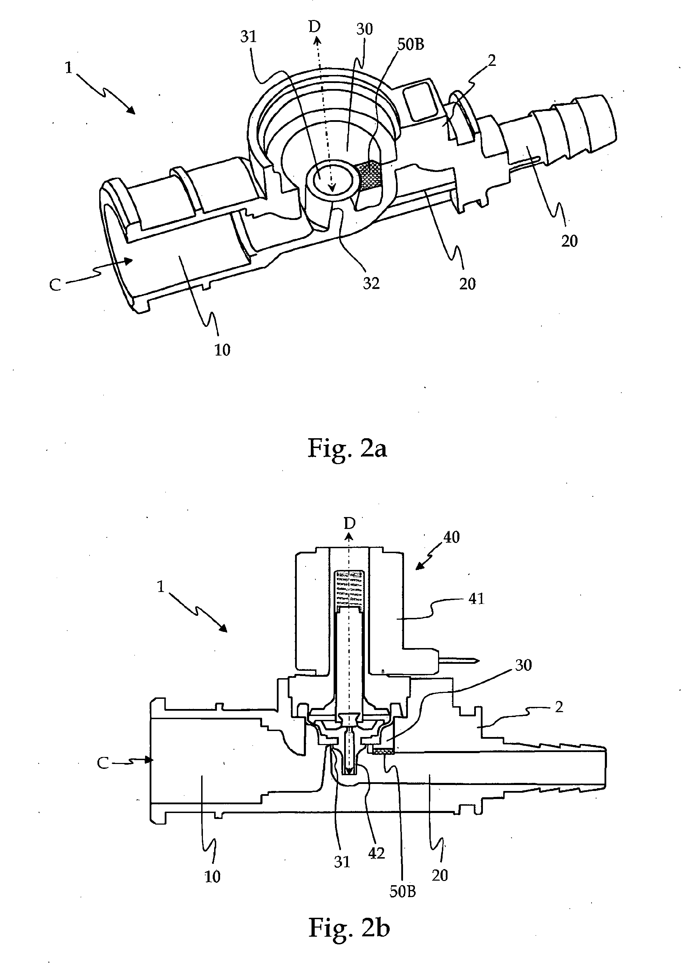

In addition, the electrovalve 1 comprises intercepting means 40, in particular associated with said intermediate portion 30, for selectively allowing or preventing the flow of said fluid from the inlet duct 10 to said outlet duct 20. The intercepting means 40 are visible in Figures 1b and 2b, while they are not shown in Figures 1a, 2a, 3a and 3b in order to make the duct C, in particular the intermediate portion 30 of the duct C, more visible. Said intercepting means 40 may comprise at least one drive element 41 (e.g. an electromagnet) electrically connected to the served washing machine, which will control at appropriate times (typically at the beginning and at the end of a certain wash step), e.g. through a timer of its own, the power supplied to the drive element 41 in order to activate a shut-off element 42 for opening or closing an opening 31 of the electrovalve 1, in particular an opening 31 of the intermediate portion 30 that communicates with said at least one outlet duct 20 and allows the fluid to flow from the intermediate portion 30 to the outlet duct 20.

As can be seen in the annexed drawings (particularly in Figures 1a, 2a and 3a), said opening 31 is obtained on a hollow element 32 that extends transversally in the duct C, in particular in the intermediate duct 30, in order to divide the inlet duct 10 from the outlet duct 20; in particular, said hollow element 32 extends substantially parallel to an activation direction D of the shut-off element 42 (said activation direction D being indicated by a dashed-dotted line in the annexed drawings).

Preferably, the opening 31 has a substantially circular shape when viewed from above, i.e. in a view parallel to the activation direction D of the shut-off element 42.

It is however clear that, according to the present invention, the shut-off element 42 and said opening 31 may also be shaped and arranged otherwise.

In accordance with the present invention, said duct C of the electrovalve 1 comprises at least one collapsible wall 50A, 50B, 50C, said at least one wall 50A, 50B, 50C being adapted to collapse in order to compensate for a possible increase in the volume and/or pressure of the fluid in said duct C, in particular upon freezing of said fluid.

Said at least one wall 50A, 50B, 50C is of the collapsible type, being thinner than the other portions of the duct C. In particular, the thickness of said portions of the duct C is in the range of 1.2 mm to 1.5 mm, and the thickness of said at least one wall 50A, 50B, 50C is in the range of 0.5 mm to 0.8 mm.

As an alternative or in addition, said at least one wall 50A, 50B, 50C is of the collapsible type because it is made of a different material than the other portions of the duct C, in particular said different material being less suited than the other portions of the duct C to withstand an increase in the volume and/or pressure of the fluid in said duct C. In a preferred embodiment, said portions of the duct C are made of fibreglass-charged polyamide (usually indicated with the acronym PA), and said at least one wall 50A, 50B, 50C is made of uncharged polyamide.

As can be seen in Figs. 1a and 1b, which illustrate a first embodiment of the electrovalve 1 according to the present invention, said at least one wall 50A, 50B, 50C consists of a first wall 50A adapted to separate the inlet duct 10 from the outlet duct 20. In particular, said first wall 50A is obtained on said hollow element 32 that extends transversally (i.e. substantially parallel to the activation direction D of the shut-off element 42) in the duct C, in particular in the intermediate duct 30, in order to divide the inlet duct 10 from the outlet duct 20, said hollow element 32 comprising an opening 31 adapted to receive at least partially the shut-off element 42 of said intercepting means 40.

In such an embodiment, the provision of the first wall 50A of the collapsible type allows to compensate for a possible increase in the volume and/or pressure of the fluid in said duct C, in particular upon freezing of said fluid, and to prevent a portion of the body 2 of the electrovalve 1 in contact with the outside from collapsing, which would result in flooding of the environment where the washing machine and the electrovalve have been placed.

As a consequence, the passage of the wash fluid from the inlet duct 10 to the outlet duct 20 allows said fluid to be fed into the served washing machine, where safety and/or alarm systems will be able to detect the presence of fluid caused by breakage of the first wall 50A.

Therefore, such a provision allows to prevent the electrovalve 1 from breaking due to the fluid contained therein freezing and expanding, which would result in flooding of the environment that houses the washing machine and the electrovalve.

Besides, the proposed solution is not costly because the electrovalve 1 is quite simple to manufacture, and allows to properly solve the problem of the electrovalve 1 breaking due to freezing of the fluid contained therein while also ensuring an adequate fluid flow through said electrovalve 1.

Figs. 2a and 2b illustrate a second embodiment of the electrovalve 1 according to the present invention.

In this embodiment, said at least one wall 50A, 50B, 50C consists of a second wall 50B adapted to separate the outlet duct 20 from the intermediate duct 30.

In particular, said intermediate duct 30 is shaped like an annular chamber, and said second wall 50B divides the intermediate duct 30 shaped like an annular chamber from the outlet duct 20.

Preferably, said intermediate duct 30 shaped like an annular chamber surrounds the hollow element 32 that extends transversally in the duct C, i.e. along the activation direction D of the shut-off element 42, said hollow element 32 including an opening 31 adapted to receive at least partially the shut-off element 42 of the intercepting means 40. In this embodiment, said second wall 50B also acts as a bottom wall of the intermediate duct 30 shaped like an annular chamber and as a top wall of the outlet duct 20.

In the second embodiment as well, the provision of the second wall 50B of the collapsible type allows to compensate for a possible increase in the volume and/or pressure of the fluid in said duct C, in particular upon freezing of said fluid, and to cause said fluid to be conveyed into the served washing machine, so that it can be detected by the safety and/or alarm systems of the washing machine itself.

Furthermore, also this provision offers the advantage of preventing, economically and without requiring a complex design of the whole electrovalve 1, a portion of the body 2 of the electrovalve 1 in contact with the outside from collapsing, which would inevitably result in flooding of the environment where the washing machine and the electrovalve 1 have been placed.

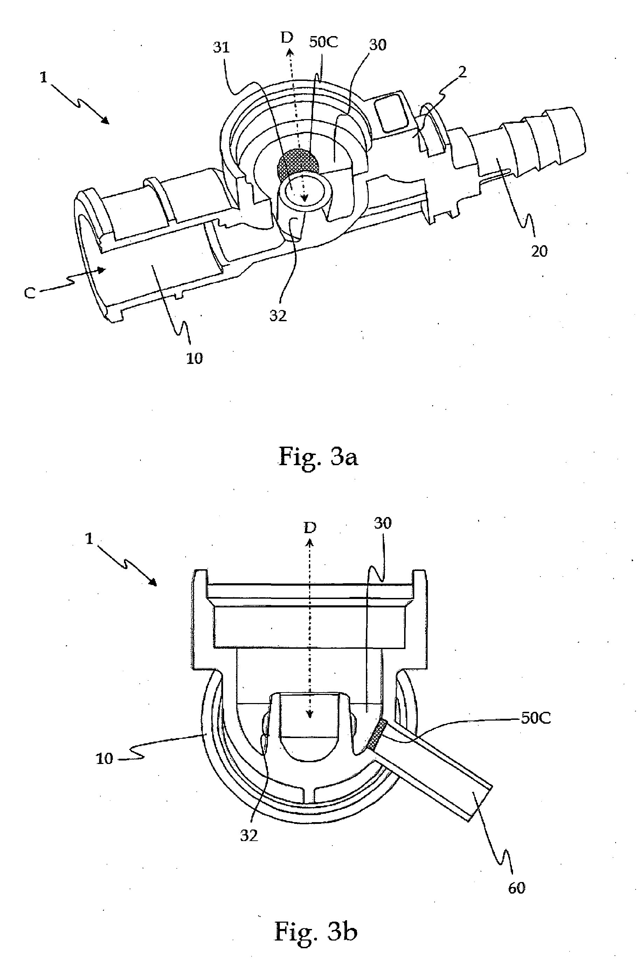

Figs. 3a and 3b illustrate a third embodiment of the electrovalve 1 according to the present invention.

In this third embodiment, said at least one wall 50A, 50B, 50C consists of a third wall 50C adapted to separate the duct C of the electrovalve 1 from a supplementary duct 60, in particular adapted to connect said electrovalve 1 to a system (not shown in the drawings) for detecting and/or discharging the fluid coming from the electrovalve 1; preferably, said detection and/or discharge system is associated with the washing machine.

In a preferred embodiment, said third wall 50C is positioned in the intermediate duct 30 and separates it from the supplementary duct 60.

Preferably, also in the third embodiment the intermediate duct 30 is shaped like an annular chamber; in addition, said intermediate duct 30 shaped like an annular chamber surrounds the hollow element 32 that extends transversally in the duct C, i.e. along the activation direction D of the shut-off element 42, said hollow element 32 including the opening 31 adapted to receive at least partially the shut-off element 42 of the intercepting means 40.

The features and advantages of the electrovalve 1 according to the present invention and of the related washing machine are apparent from the above description.

In particular, the provision of said at least one wall 50A, 50B, 50C in accordance with the present invention allows to overcome the drawbacks of the prior art and to provide an electrovalve 1 which is not subject to the environmental conditions of the place that houses the electrovalve 1 and the associated washing machine.

A further advantage of the electrovalve 1 according to the present invention is that said at least one wall 50A, 50B, 50C allows said electrovalve 1 to be unaffected by very cold or frosty conditions in the operating environment, in particular when it contains a certain quantity of fluid. In fact, said at least one collapsible wall 50A, 50B, 50C allows to compensate for the increase in the volume of the fluid due to freezing and, as a result, it allows to prevent the electrovalve 1 from breaking in places that would inevitably cause the flooding of the environment that houses the washing machine and the electrovalve 1.

In addition, the electrovalve 1 according to the present invention is reliable without being excessively costly and without requiring any excessively difficult and complex manufacturing steps in order to avoid that any frozen fluid might cause the electrovalve 1 to break.

The particular provision of said at least one collapsible wall 50A, 50B, 50C allows to ensure an adequate fluid flow through the duct C because it does not require the use of an additional element inserted in said duct C which, although it would allow to compensate for an increase in the volume of the fluid due to freezing, would however restrict and/or throttle said duct C.

The electrovalve and the related washing machine described herein by way of example may be subject to many possible variations; it is also clear that in the practical implementation of the invention the illustrated details may have different shapes or be replaced with other technically equivalent elements.

It can therefore be easily understood that the present invention is not limited to the above-described electrovalve and related washing machine, but may be subject to many modifications, improvements or replacements of equivalent parts and elements without departing from the inventive idea, as only defined by the following claims.

## Claims

1. An electrovalve (1) for supplying a fluid into a washing machine, in particular for household use, comprising a body (2) provided with a duct (C) for the passage of said fluid, said duct (C) comprising:
- at least one inlet duct (10) for said fluid;
- at least one outlet duct (20) for said fluid;
- an intermediate duct (30) for connecting said at least one inlet duct (10) to said at least one outlet duct (20),
said electrovalve (1) comprising intercepting means (40), in particular associated with said intermediate portion (30), for selectively allowing or preventing the connection between said at least one inlet duct (10) and said at least one outlet duct (20),
said electrovalve (1) being **characterized in that**
said duct (C) of the electrovalve (1) comprises at least one collapsible wall (50A, 50B, 50C), said at least one collapsible wall (50A, 50B, 50C) being adapted to collapse in order to compensate for a possible increase in the volume and/or pressure of the fluid in said duct (C), in particular upon freezing of said fluid.

2. An electrovalve (1) according to claim 1, **characterized in that** said at least one collapsible wall (50A, 50B, 50C) is of the collapsible type because it is thinner than the other portions of the duct (C).

3. An electrovalve (1) according to claim 2, **characterized in that** the thickness of said portions of the duct (C) is in the range of 1.2 mm to 1.5 mm and the thickness of said at least one collapsible wall (50A, 50B, 50C) is in the range of 0.5 mm to 0.8 mm.

4. An electrovalve (1) according to one or more of the preceding claims, **characterized in that** said at least one collapsible wall (50A, 50B, 50C) is of the collapsible type because it is made of a different material than the other portions of the duct (C), in particular said different material being less suited than the other portions of the duct (C) to withstand an increase in the volume and/or pressure of the fluid in said duct (C).

5. An electrovalve (1) according to claim 4, **characterized in that** said portions of the duct (C) are made of fibreglass-charged polyamide, and said at least one collapsible wall (50A, 50B, 50C) is made of uncharged polyamide.

6. An electrovalve (1) according to one or more of the preceding claims, **characterized in that** said at least one collapsible wall (50A, 50B, 50C) consists of a first collapsible wall (50A) adapted to separate the inlet duct (10) from the outlet duct (20).

7. An electrovalve (1) according to claim 6, **characterized in that** said first collapsible wall (50A) is obtained on a hollow element (50A) that extends transversally in the duct (C), in particular in the intermediate duct (30), in order to divide the inlet duct (10) from the outlet duct (20), said hollow element (32) comprising an opening (31) adapted to receive at least partially a shut-off element (42) of said intercepting means (40).

8. An electrovalve (1) according to one or more of the preceding claims, **characterized in that** said at least one collapsible wall (50A, 50B, 50C) consists of a second collapsible wall (50B) adapted to separate the outlet duct (20) from the intermediate duct (30).

9. An electrovalve (1) according to claim 8, **characterized in that** said intermediate duct (30) is shaped like an annular chamber and said second collapsible wall (50B) divides the intermediate duct (30) shaped like an annular chamber from the outlet duct (20).

10. An electrovalve (1) according to claim 9, **characterized in that** said intermediate duct (30) shaped like an annular chamber surrounds a hollow element (32) that extends transversally in the duct (C), said hollow element (32) including an opening (31) adapted to receive at least partially a shut-off element (42) of said intercepting means (40).

11. An electrovalve (1) according to one or more of the preceding claims, **characterized in that** said at least one collapsible wall (50A, 50B, 50C) consists of a third collapsible wall (50C) adapted to separate the duct (C) of the electrovalve (1) from a supplementary duct (60), in particular adapted to connect said electrovalve (1) to a system for detecting and/or discharging the fluid coming from the electrovalve (1).

12. An electrovalve (1) according to claim 11, **characterized in that** said third collapsible wall (50C) is positioned in the intermediate duct (30) and separates said intermediate duct (30) from the supplementary duct (60).

13. An electrovalve (1) according to one or more of the preceding claims 11 and 12, **characterized in that** said intermediate duct (30) is shaped like an annular chamber.

14. An electrovalve (1) according to claim 13, **characterized in that** said intermediate duct (30) shaped like an annular chamber surrounds a hollow element (32) that extends transversally in the duct (C), said hollow element (32) including an opening (31) adapted to receive at least partially a shut-off element (42) of said intercepting means (40).

15. A washing machine, in particular for household use, which comprises an electrovalve (1) according to one or more of the preceding claims 1 to 14.

## Patentansprüche

1. Elektroventil (1) zum Zuführen eines Fluids in eine Waschmaschine, insbesondere zur Nutzung im Haushalt, umfassend einen Körper (2), der mit einem Leitungskanal (C) für den Durchfluss des Fluids versehen ist, wobei der Leitungskanal (C) umfasst:
- zumindest einen Einlassleitungskanal (10) für das Fluid;
- zumindest einen Auslassleitungskanal (20) für das Fluid;
- einen Zwischenleitungskanal (30) zum Verbinden des zumindest einen Einlassleitungskanals (10) mit dem zumindest einen Auslassleitungskanal (20), wobei das Elektroventil (1) Abfangmittel (40) umfasst, welche insbesondere mit dem Zwischenabschnitt (30) in Verbindung stehen, zum selektiven Ermöglichen oder Verhindern der Verbindung zwischen dem zumindest einen Einlassleitungskanal (10) und dem zumindest einen Auslassleitungskanal (20),
wobei das Elektroventil (1) **dadurch gekennzeichnet ist, dass**
der Leitungskanal (C) des Elektroventils (1) zumindest eine klappbare Wand (50A, 50B, 50C) umfasst, wobei die zumindest eine Kollabierwand (50A, 50B, 50C) angepasst ist, zu kollabieren, um einen möglichen Anstieg in dem Volumen und/oder dem Druck des Fluids in dem Leitungskanal (C) zu kompensieren, insbesondere auf ein Gefrieren des Fluids hin.

2. Elektroventil (1) nach Anspruch 1, **dadurch gekennzeichnet, dass** die zumindest eine Kollabierwand (50A, 50B, 50C) von dem kollabierbaren Typ ist, da sie dünner ist als die anderen Abschnitte des Leitungskanals (C).

3. Elektroventil (1) nach Anspruch 2, **dadurch gekennzeichnet, dass** die Dicke der Abschnitte des Leitungskanals (C) in dem Bereich von 1,2 mm bis 1,5 mm liegt und die Dicke der zumindest einen Kollabierwand (50A, 50B, 50C) in dem Bereich von 0,5 mm bis 0,8 mm liegt.

4. Elektroventil (1) nach einem oder mehreren der vorangegangenen Ansprüche, **dadurch gekennzeichnet, dass** die zumindest eine Kollabierwand (50A, 50B, 50C) von dem kollabierbaren Typ ist, da sie aus einem anderen Material gemacht ist als die anderen Abschnitte des Leitungskanals (C), wobei das andere Material insbesondere weniger geeignet ist als das der anderen Abschnitte des Leitungskanals (C), einem Anstieg in dem Volumen und/oder dem Druck des Fluids in dem Leitungskanal (C) zu widerstehen.

5. Elektroventil (1) nach Anspruch 4, **dadurch gekennzeichnet, dass** die Abschnitte des Leitungskanals (C) aus einem mit Fiberglas versetzten Polyamid gemacht sind, und die zumindest eine Kollabierwand (50A, 50B, 50C) aus einem unversetzten Polyamid gemacht ist.

6. Elektroventil (1) nach einem oder mehreren der vorangegangenen Ansprüche, **dadurch gekennzeichnet, dass** die zumindest eine Kollabierwand (50A, 50B, 50C) aus einer ersten Kollabierwand (50A) besteht, die angepasst ist, den Einlassleitungskanal (10) von dem Auslassleitungskanal (20) zu trennen.

7. Elektroventil (1) nach Anspruch 6, **dadurch gekennzeichnet, dass** die erste Kollabierwand (50A) an einem hohlen Element (50A) erhalten wird, das sich transversal in dem Leitungskanal (C) erstreckt, insbesondere in dem Zwischenleitungskanal (30), um den Einlassleitungskanal (10) von dem Auslassleitungskanal (20) zu trennen, wobei das hohle Element (32) eine Öffnung (31) umfasst, die angepasst ist, zumindest teilweise ein Abschaltelement (42) der Abfangmittel (40) zu empfangen.

8. Elektroventil (1) nach einem oder mehreren der vorangegangenen Ansprüche, **dadurch gekennzeichnet, dass** die zumindest eine Kollabierwand (50A, 50B, 50C) aus einer zweiten Kollabierwand (50B) besteht, die angepasst ist, den Auslassleitungskanal (20) von dem Zwischenleitungskanal (30) zu trennen.

9. Elektroventil (1) nach Anspruch 8, **dadurch gekennzeichnet, dass** der Zwischenkanal (30) wie eine ringförmige Kammer geformt ist und die zweite Kollabierwand (50B) den Zwischenleitungskanal (30), der wie eine ringförmige Kammer geformt ist, von dem Auslassleitungskanal (20) trennt.

10. Elektroventil (1) nach Anspruch 9, **dadurch gekennzeichnet, dass** der Zwischenleitungskanal (30), der wie eine ringförmige Kammer geformt ist, ein hohles Element (32) umgibt, welches sich transversal in dem Leitungskanal (C) erstreckt, wobei das hohle Element (32) eine Öffnung (31) beinhaltet, die angepasst ist, zumindest teilweise ein Abschaltelement (42) der Abfangmittel (40) zu empfangen.

11. Elektroventil (1) nach einem oder mehreren der vorangegangenen Ansprüche, **dadurch gekennzeichnet, dass** die zumindest eine Kollabierwand (50A, 50B, 50C) aus einer dritten Kollabierwand (50C) besteht, die angepasst ist, den Leitungskanal (C) des Elektroventils (1) von einem Zusatzleitungskanal (60) zu trennen, welcher insbesondere angepasst ist, das Elektroventil (1) mit einem System zum Detektieren und/oder Ablassen des Fluids, das von dem Elektroventil (1) kommt, zu verbinden.

12. Elektroventil (1) nach Anspruch 11, **dadurch gekennzeichnet, dass** die dritte Kollabierwand (50C) in dem Zwischenleitungskanal (30) positioniert ist und den Zwischenleitungskanal (30) von dem Zusatzleitungskanal (60) trennt.

13. Elektroventil (1) nach einem oder mehreren der vorangegangenen Ansprüche 11 und 12, **dadurch gekennzeichnet, dass** der Zwischenleitungskanal (30) wie eine ringförmige Kammer geformt ist.

14. Elektroventil (1) nach Anspruch 13, **dadurch gekennzeichnet, dass** der Zwischenleitungskanal (30), der wie eine ringförmige Kammer geformt ist, ein hohles Element (32) umschließt, das sich transversal in dem Leitungskanal (C) erstreckt, wobei das hohle Element (32) eine Öffnung (31) beinhaltet, die angepasst ist, zumindest teilweise ein Abschaltelement (42) der Abfangmittel (40) zu empfangen.

15. Waschmaschine, insbesondere zur Nutzung im Haushalt, die ein Elektroventil (1) nach einem oder mehreren der vorangegangenen Ansprüche 1 bis 14 umfasst.

## Revendications

1. Electrovanne (1) permettant de fournir un fluide dans une machine à laver, destinée en particulier à une utilisation domestique, comportant un corps (2) doté d'un conduit (C) permettant le passage dudit fluide, ledit conduit (C) comprenant :
- au moins un conduit d'entrée (10) pour ledit fluide ;
- au moins un conduit de sortie (20) pour ledit fluide ;
- un conduit intermédiaire (30) servant à connecter ledit, au moins un conduit d'entrée (10) au dit au moins un conduit de sortie (20),
ladite électrovanne (1) comprenant des moyens d'interception (40) associés en particulier à ladite partie intermédiaire (30), pour permettre ou empêcher, de façon sélective, la connexion entre ledit au moins un conduit d'entrée (10) et ledit au moins un conduit de sortie (20),
ladite électrovanne (1) étant **caractérisée en ce que** ledit conduit (C) de l'électrovanne (1) comporte au moins une paroi déformable (50A, 50B, 50C), ladite au moins une paroi déformable (50A, 50B, 50C) étant adaptée pour se déformer afin de compenser une augmentation possible du volume et/ou de pression du fluide dans ledit conduit (C), en particulier lors du gel dudit fluide.

2. Electrovanne (1) selon la revendication 1, **caractérisée en ce que** ladite au moins une paroi déformable (50A, 50B, 50C) est une paroi du type déformable parce qu'elle est plus mince que les autres parties du conduit (C).

3. Electrovanne (1) selon la revendication 2, **caractérisée en ce que** l'épaisseur desdites parties du conduit (C) se situe dans la plage de 1,2 mm à 1,5 mm et **en ce que** l'épaisseur de ladite, au moins une, paroi déformable (50A, 50B, 50C) se situe dans la plage de 0,5 mm à 0,8 mm.

4. Electrovanne (1) selon une ou plusieurs des revendications précédentes, **caractérisée en ce que** ladite au moins une paroi déformable (50A, 50B, 50C) est du type déformable parce qu'elle est constituée d'un matériau différent de celui des autres parties du conduit (C), en particulier parce que ledit matériau différent est moins approprié que celui des autres parties du conduit (C) pour supporter une augmentation du volume et/ou de la pression du fluide dans ledit conduit (C).

5. Electrovanne (1) selon la revendication 4, **caractérisée en ce que** lesdites parties du conduit (C) sont constituées de polyamide chargé en fibres de verre, et **en ce que** ladite, au moins une, paroi déformable (50A, 50B, 50C) est constituée de polyamide non chargé.

6. Electrovanne (1) selon l'une ou plusieurs des revendications précédentes, **caractérisée en ce que** ladite, au moins une, paroi déformable (50A, 50B, 50C) est constituée d'une première paroi déformable (50A) adaptée pour séparer le conduit d'entrée (10) du conduit de sortie (20).

7. Electrovanne (1) selon la revendication 6, **caractérisée en ce que** ladite première paroi déformable (50A) est obtenue sur un élément creux (50A) qui s'étend transversalement dans le conduit (C), en particulier dans le conduit intermédiaire (30), afin de séparer le conduit d'entrée (10) du conduit de sortie (20), ledit élément creux (32) comportant une ouverture (31) adaptée pour recevoir au moins partiellement un organe de fermeture (42) desdits moyens d'interception (40).

8. Electrovanne (1) selon l'une ou plusieurs des revendications précédentes, **caractérisée en ce que** ladite au moins une paroi déformable (50A, 50B, 50C) est constituée d'une seconde paroi déformable (50B) adaptée pour séparer le conduit de sortie (20) du conduit intermédiaire (30).

9. Electrovanne (1) selon la revendication 8, **caractérisée en ce que** ledit conduit intermédiaire (30) présente une conformation d'une chambre annulaire et **en ce que** ladite seconde paroi déformable (50B) sépare le conduit intermédiaire (30), présentant la conformation d'une chambre annulaire, du conduit de sortie (20).

10. Electrovanne (1) selon la revendication 9, **caractérisée en ce que** ledit conduit intermédiaire (30) présentant la conformation d'une chambre annulaire entoure un élément creux (32) qui s'étend transversalement dans le conduit (C), ledit élément creux (32) comportant une ouverture (31) conçue pour recevoir au moins partiellement un organe de fermeture (42) desdits moyens d'interception (40).

11. Electrovanne (1) selon l'une ou plusieurs des revendications précédentes, **caractérisée en ce que** ladite au moins une paroi déformable (50A, 50B, 50C) est constituée d'une troisième paroi déformable (50C) adapté pour séparer le conduit (C) de l'électrovanne (1) d'un conduit supplémentaire (60), adapté en particulier pour connecter ladite électrovanne (1) à un système permettant de détecter et/ou d'évacuer le fluide sortant de l'électrovanne (1).

12. Electrovanne (1) selon la revendication 11, **caractérisée en ce que** ladite troisième paroi déformable (50C) est placée dans le conduit intermédiaire (30) et sépare ledit conduit intermédiaire (30) du conduit supplémentaire (60).

13. Electrovanne (1) selon l'une ou plusieurs des revendications précédentes 11 et 12, **caractérisée en ce que** ledit conduit intermédiaire (30) présente une conformation d'une chambre annulaire.

14. Electrovanne (1) selon la revendication 13, **caractérisée en ce que** ledit conduit intermédiaire (30) présentant la conformation d'une chambre annulaire entoure un élément creux (32) qui s'étend transversalement dans le conduit (C), ledit élément creux (32) comportant une ouverture (31) conçue pour recevoir, au moins partiellement, un organe de fermeture (42) desdits moyens d'interception (40).

15. Machine à laver, destinée en particulier à une utilisation domestique, laquelle comprend une électrovanne (1) selon l'une ou plusieurs des revendications précédentes 1 à 14.
